# EUROPÄISCHE PATENTANMELDUNG

(11) **EP 1 285 561 A2**
(43) Veröffentlichungstag der Anmeldung: **26.02.2003**
(21) Anmeldenummer: 02018036.0
(22) Anmeldetag: 13.08.2002
(51) Int. Cl.: A01B 35/22

(54) **Bodenbearbeitungswerkzeug**

(30) Priorität: 16.08.2001 DE 10140340
(71) Anmelder: Amazonen-Werke H. Dreyer GmbH & Co. KG, 49205 Hasbergen (DE)
(72) Erfinder: Gattermann, Bernd, 27798 Hude (DE); Tiessen, Reimer Uwe, 26135 Oldenburgl (DE)

(57) **Zusammenfassung**

Bodenbearbeitungswerkzeug für Bodenbearbeitungsgeräte mit einem Halm (2), an dessen unteren Ende ein Zinken (5) mittels einer sich in Richtung des freien Endes des Zinkens (5) bzw. des Halmes (2) vorzugsweise verjüngenden Schafthalterung (4) durch Form- und Reibschluss lösbar befestigt ist. Um die Schafthalterung (4) und der Zinken (5) zumindest einen fluchtenden Durchbruch aufweisen, dass in diese fluchtenden Durchbrüche ein den Zinken (5) auf der Schafthalterung (4) haltendes Sicherungselement (10) angeordnet ist, ist vorgesehen dass die Schafthalterung (4) und der Zinken (5) jeweils zumindest einen fluchtenden Durchbruch aufweisen, dass in diese fluchtenden Durchbrüche ein den Zinken (5) auf der Schafthalterung (4) haltendes Sicherungselement (10) angeordnet ist.

## Beschreibung

Die Erfindung betrifft ein Bodenbearbeitungswerkzeug gemäß des Oberbegriffes des Patentanspruches 1.

Ein derartiges Bodenbearbeitungswerkzeug ist beispielsweise in der US-PS 46 38 868 beschrieben. Die dort beschriebene Befestigung des Zinkens mittels Form- und Reibschluss am Ende eines Halmes hat sich hinsichtlich der Auswechselbarkeit des Zinkens bewährt.

Beim Einsatz mit Form- und Reibschluss am Halm befestigten Zinken, die eine Federungsmöglichkeit aufweist, hat sich jedoch gezeigt, dass aufgrund der Federwirkung des Halmes es zu Verlusten des Zinkens während der Arbeit kommen kann. Insbesondere wenn der Zinken auf ein im Boden festsitzendes Hindernis auftrifft und nach hinten ausweicht und nach Überwindung des Hindernisses wieder nach vorne schnellt, können die Zinken von den Halmen abgeworfen werden.

Der Erfindung liegt die Aufgabe zugrunde, für mit Form- und Reibschluss an Halmen befestigten Zinken eine einfach ausgebildete Verlustsicherung zu schaffen.

Diese Aufgabe wird erfindungsgemäß dadurch gelöst, dass die Schafthalterung und der Zinken zumindest einen fluchtenden Durchbruch aufweisen, dass in diesen fluchtenden Durchbrüche ein den Zinken auf der Schafthalterung haltendes Sicherungselement angeordnet ist.

Aufgrund dieses Sicherungselementes ist gewährleistet, dass der Zinken nicht von dem Halm abfallen kann, falls der Zinken sich auf seiner Halterung lösen sollte, wenn also kein Reibschluss mehr vorhanden ist, fällt der Zinken nicht vom Halm ab. Da das Sicherungselement den Zinken auf der Schafthalterung hält kann der Zinken sich bei der weiteren Bodenbearbeitung wieder auf der Schafthalterung festsetzen, so dass es neben dem Formschluss wieder zu einem Reibschluss kommt.

In einfacher Weise lässt sich das Sicherungselement als Kerbspannstift oder als Bolzen mit einem Sicherungsmittel ausbilden.

Weitere Einzelheiten der Erfindung sind der Beispielsbeschreibung und den Zeichnungen zu entnehmen. Hierbei zeigen
- Fig. 1: einen Zinken in perspektivischer Darstellung und
- Fig. 2: die Halterung des Zinkens im Schnitt II -II in vergrößertem Maßstab.

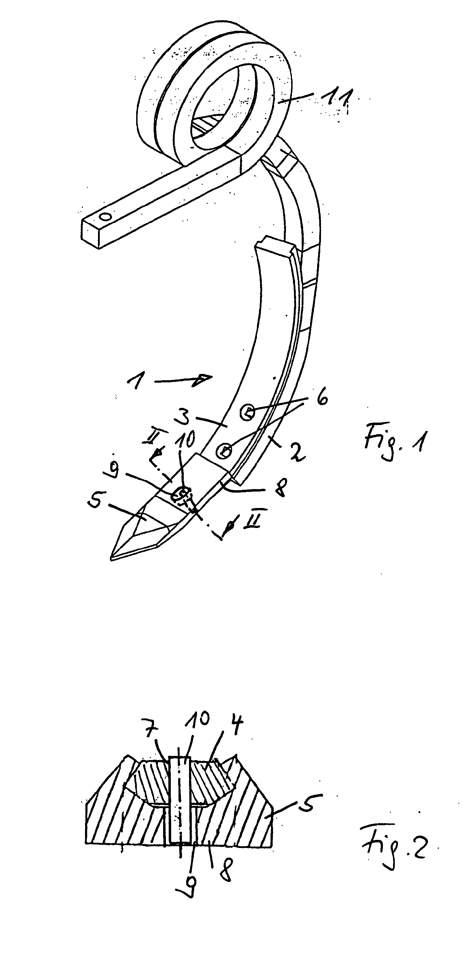

Das Bodenbearbeitungswerkzeug 1 ist für die Anordnung an Bodenbearbeitungsgeräte, beispielsweise Grubber, vorgesehen. Das Bodenbearbeitungswerkzeug 1, weist den Halm 2, das Leitblech 3, die an dem Leitblech 3 angebrachten Schafthalterung 4 und den Zinken 5 auf. Das Leitblech 3 ist mittels der beiden Schrauben 6 an dem Halm 2 befestigt. An der Unterseite des Leitbleches 3 ist die Schafthalterung 4 einstückig an dem Leitblech 3 angeordnet. Es ist jedoch auch möglich, die Schafthalterung 4 als gesondertes Teil auszubilden und zwischen Leitblech 3 und Halm 2 mittels der Schrauben 6 zu befestigen. Die Schafthalterung 4 kann auch einstückig am unteren Ende des Halmes 2 angeordnet sein. Die Schafthalterung 4 verjüngt sich nach unten. Auf die Schafthalterung 4 wird mittels Form- und Reibschluss der Zinken 5 aufgesteckt. Hierzu weist der Zinken die mit der Schafthalterung 4 koresondierende Form auf, wie in Fig. 2 dargestellt ist. Der Zinken 5 wird mittels Form- und Reibschluss auf der Schafthalterung 4 gehalten. In der Schafthalterung 4 ist der Durchbruch 7 und in der Zinkenhalterung 8 des Zinkens 5 der Durchbruch 9 angeordnet. Die beiden Durchbrüche 7 und 9 fluchten miteinander. In diese beiden fluchtenden Durchbrüche 7 und 9 ist das Sicherungselement 10 angeordnet. Das Sicherungselement 10 ist im Ausführungsbeispiel als Kerbspannstift 10 ausgebildet. Der Durchmesser des Kerbspannstiftes ist auf die Größe des Durchbruches 7 in der Schafthalterung 4 abgestimmt. In dem Zinken 5 ist eine größere Bohrung 9 angebracht, die auch als Langloch ausgebildet sein kann, um evtl. Fertigungstolleranzen auszugleichen, damit in jedem Falle der Zinken 5 mit Reibschluss neben Formschluss auf der Schafthalterung 4 angeordnet werden kann. Weiterhin stellt diese größere Bohrung 9 sicher, dass der Kerbspannstift durch den Durchbruch 9 in dem Durchbruch 7 angebracht werden kann.

Es ist auch möglich, das Sicherungselement als Bolzen mit einem Sicherungsmittel auszubilden.

Falls sich nun aufgrund von Vibrationen des Halmes 2, der aufgrund der Federwindung 11 federnd an dem Rahmen des Grubbers angeordnet ist, sich der Zinken 5 auf der Schafthalterung 4 lösen sollten, stellt das Sicherungsmittel 10 sicher, dass der Zinken 5 nicht von der Schafthalterung 4 abfällt bzw. abgeworfen wird.

**[Stand der Technik]**

**[Aufgabe der Erfindung]**

## Patentansprüche

1. Bodenbearbeitungswerkzeug für Bodenbearbeitungsgeräte mit einem Halm, an dessen unteren Ende ein Zinken mittels einer sich in Richtung des freien Endes des Zinkens bzw. des Halmes vorzugsweise verjüngenden Schafthalterung durch Form- und Reibschluss lösbar befestigt ist, **dadurch gekennzeichnet, dass** die Schafthalterung (4) und der Zinken (5) jeweils zumindest einen fluchtenden Durchbruch (7,9) aufweisen, dass in diese fluchtenden Durchbrüche (7,9) ein den Zinken (5) auf der Schafthalterung (4) haltendes Sicherungselement (10) angeordnet ist.

2. Bodenbearbeitungswerkzeug nach Anspruch 1, **dadurch gekennzeichnet, dass** das Sicherungselement (10) als Kerbspannstift ausgebildet ist.

3. Bodenbearbeitungswerkzeug nach Anspruch 1, **dadurch gekennzeichnet, dass** das Sicherungselement als Bolzen mit einem Sicherungsmittel ausgebildet ist.
